# EUROPEAN PATENT APPLICATION

(11) **EP 1 835 221 A1**
(43) Date of publication of application: **19.09.2007**
(21) Application number: 05799337.0
(22) Date of filing: 28.10.2005
(51) Int. Cl.: F16L 59/06, F16L 59/14, H01B 12/14, H01B 13/00

(54) **VACUUM HEAT INSULATION TUBE**

(30) Priority: 01.12.2004 JP 2004349045
(71) Applicant: Sumitomo Electric Industries, Ltd., Osaka-shi, Osaka 541-0041 (JP)
(72) Inventor: HIROSE, Masayuki c/o Sumitomo El. Industries, Ltd., Osaka (JP)
(74) Representative: Joly, Jean-Jacques
(86) International application number: PCT/JP2005/019859
(87) International publication number: WO 2006/059442

(57) **Abstract**

The present invention provides a vacuum thermal insulated pipe which is a double structure pipe including inner and outer pipes, the space between the inner and outer pipes being evacuated. In addition, a gas adsorber is provided between the inner and outer pipes. The gas adsorber includes a getter capable of adsorbing gases, a case for vacuum-sealing the getter, and a breaking member for breaking the case by deformation at a predetermined temperature. When the case is broken by the broken material to open the sealed state, the getter material adsorbs gases present between the inner and outer pipes, thereby shortening the vacuum processing time and maintaining a high vacuum rate over a long period of time. The present invention also provides a superconducting cable including the vacuum thermal insulated pipe.

## Description

### Technical Field

The present invention relates to a vacuum thermal insulated pipe suitable for transporting cryogenic fluids and high-temperature fluids and to a superconducting cable including the thermal insulated pipe. Specifically, the present invention relates to a vacuum thermally insulated pipe which allows an efficient vacuum processing operation and which can maintain a high vacuum rate over a long period of time.

### Background Art

A known example of constituent materials for constituting transport paths for various cryogenic fluids or high-temperature fluids is a vacuum thermal insulated pipe. A representative structure of the vacuum thermal insulated pipe is a double structure including an inner pipe and an outer pipe, the space between the inner and outer pipes being evacuated. Another structure further includes a thermal insulation wound on the periphery of the inner pipe in order to further increase insulation performance.

In such a vacuum thermal insulated pipe, the vacuum rate decreases due to the increase of the pressure if there become to exist, between the inner and outer pipes, moisture (water vapor) contained in the constituent materials of the pipe itself and the thermal insulation, gases discharged from the constituent materials over a long period of time, H₂ gas penetrating into the pipe over a long time, or the like. In order to prevent a decrease in the vacuum rate, therefore, a so-called baking is performed during evacuation. In the baking process, the thermal insulated pipe is heated to high temperature to activate and discharge the moisture and gases contained in the constituent materials. With respect to gases which penetrate with the passage of time, it is effective to dispose a gas adsorber between the inner and outer pipes.

Patent Document 1 discloses a structure in which a getter is provided as an adsorbent for adsorbing residual gases in a vacuum vessel, the adsorbing of gases being done by activation caused by application of an electrical current. Patent Document 2 discloses a vacuum thermal insulation including an iron vessel filled with a pearlite powder and vacuum-encapsulated.

Patent Document 1: Japanese Unexamined Patent Application Publication No. 2004-138283
Patent Document 2: Japanese Unexamined Patent Application Publication No. 58-143041

### Disclosure of Invention

### Problem to be Solved by the Invention

In some cases, the baking process is performed under a condition in which a vacuum thermal insulated pipe includes a content therein. In this case, if there is a possibility of the contents being thermally damaged by increase in the heating temperature of the baking process, the baking process must be done at a heating temperature lower than the temperature at which the contents may be damaged. For example, in the case of a superconducting cable, a baking process is performed in a state in which a vacuum thermally insulated pipe contains a cable core including a superconducting conductor, and therefore the baking is performed at a temperature that may not cause a thermal damage to the core, specifically at about 100°C or less. However, the baking at such a low temperature takes much time for vacuum processing. Therefore, it has been demanded that the operation time be shortened.

In order to adsorb gases on a gas adsorbent, the gas adsorbent must be activated by treatment such as heat treatment or the like. However, if the activated gas adsorbent is left to stand in the air, the adsorbing ability thereof decreases within a short time; that is a problem to be overcome. For example, in a case of an elongated pipe of several hundreds m in length, such as a thermally insulated pipe used for a superconducting cable, a double structure is formed not by inserting a tubular inner pipe into a previously formed tubular outer pipe, but by disposing a plate around an inner pipe in a manner such that the sides of the plate abut each other and welding the abutted sides so as to form an outer pipe. Therefore, the activated gas adsorbent disposed on the inner pipe is exposed to air until it is covered with the outer pipe and the vacuum-processing is accomplished. Accordingly, a sufficient adsorption effect cannot be exhibited by the gas adsorbent.

Therefore, a main object of the present invention is to provide a vacuum thermally insulated pipe in which a vacuum processing time can be shortened and a high vacuum rate can be maintained over a long period of time. Another object of the present invention is to provide a superconducting cable which includes such vacuum thermally insulated pipe.

### Means for Solving the Problem

The object of the present invention can be achieved by providing a vacuum-sealed gas adsorber including a gas adsorbing getter in a manner such that the sealing of the getter can be broken at a predetermined temperature so as to make the getter contact with gases. Namely, a vacuum thermally insulated pipe of the present invention includes inner and outer pipes and gas adsorbers disposed between the inner and outer pipes. The gas adsorber includes a getter for adsorbing gases, a case for housing the getter in a vacuum sealed state, and a breaking member for breaking the vacuum state of the case by deformation at a predetermined temperature.

In the vacuum thermally insulated pipe of the present invention, it is possible to maintain the previously activated active state of the getter by housing the getter in a case under vacuum-sealed conditions until the sealing is broken. Therefore, it is possible to effectively lessen the decrease of gas adsorbing effect, which decrease is caused by exposure to air. For example, when the temperature at which the deformation of the breaking member is caused is equivalent to a baking temperature, gases activated by baking can be effectively adsorbed on the getter. Accordingly, it is possible to shorten the vacuum processing time by employing both exhausting and gas adsorption, as compared with a conventional case in which only exhausting is done. Accordingly, it is possible to shorten the vacuum processing time by employing both exhausting and gas adsorption, as compared with a conventional case in which only exhausting is don. Furthermore, the temperature that causes the deformation of the breaking member may be a temperature at which the vacuum thermally insulated pipe of the present invention is used. In this case, gases which have penetrated with the passage of time during a long period of use can be effectively absorbed, and the high vacuum rate can be maintained over a long time. The present invention will be described in detail below.

The vacuum thermal insulated pipe of the present invention has a double structure including at least one inner pipe and at least one outer pipe. However, a triple or higher-order structure may be used for further increasing insulation performance. The inner and outer pipes are formed using a material excellent in air-tightness and water-tightness. If the pipes are made of a metallic material such as stainless steel, gases little penetrate through them with the passage of time, and furthermore the strength is superior, as compared with pipes made of plastics. The inner and outer pipes may be flat pipes having a smooth surface or corrugated pipes having an uneven surface and excellent flexibility. The shape of the pipes may be appropriately determined according to application. The space between the inner and outer pipes is evacuated at an appropriate vacuum rate according to application.

The present invention is characterized in that gas adsorbers are disposed between the inner and outer pipes, the gas adsorber including a getter for adsorbing gases, a case for housing the getter in the vacuum sealed state, and a breaking member capable of breaking the vacuum state of the case. The getter material may be appropriately selected according to the gas to be adsorbed. The getter for adsorbing hydrogen gas may be made of a material used as a hydrogen storage alloy, such as a magnesium alloy, titanium alloy, vanadium alloy, lanthanum alloy, or zirconium alloy. The materials for adsorbing gases other than hydrogen, for example, oxygen, nitrogen, water vapor, and the like, may be porous materials such as activated carbon, zeolite, and synthetic zeolite. In particular, synthetic zeolite exhibits a very high dewatering effect when being heated to about 300°C to 400°C. The case may be varied according to the type of the getter, and a plurality of gas adsorbers containing different kinds of getters may be provided so that various types of gases can be adsorbed. Specifically, for example, a case containing a hydrogen storage alloy for adsorbing hydrogen and a case containing a porous material for adsorbing gases other than hydrogen may be provided. The shape of the getter material is not particularly limited as long as it can be housed in the case: it may be block-shaped or powdery. The powdery getter can be easily housed in the case, and also a larger gas contact area can be obtained with it.

The above getter material is housed in the case. The case should have strength sufficient to resist an external pressure since it is evacuated to a low pressure, whereas the case should be capable of being broken by the breaking member which will be described later below. The suitable material for forming the case is metal because it hardly allows gases to permeate from the outside and hardly adsorbs gases even if it is exposed to air for a long period of time. Examples of such a metal include aluminum, stainless steel, and the like. The case is preferably formed using a metal foil or thin metallic sheet or composed of such a material. Although the case may be made of a metallic material alone, it may be made of a composite material consisting of lamination of a metal foil and a plastic layer provided on the outer surface thereof, or a composite material consisting of a plastic film and a metal layer formed by vapor-deposition on at least one surface thereof. When such a composite material is used, the metal side thereof, not the plastic side, should preferably be adopted as the inner side where the getter is housed. As for the plastic layer, a material that does not adsorb gases much should preferably be selected. In addition, the plastic is preferably not meltable at the baking temperature, but may be melted as long as the plastic does not affect the inner pipe even when melted. The shape of the case is, for example, a bag-like shape. The bag-shaped case is vacuum-sealed after the previously activated getter is housed therein. In this structure, the getter can maintain its high gasadsorbing property until the case is broken. The vacuum rate in the case is preferably the same as or lower than that in the vacuum thermal insulated pipe.

The breaking member for breaking the case is a member which can be deformed at a predetermined temperature so as to automatically break the case to release the vacuum sealed state of the case. The broken member is formed using, for example, a shape memory alloy or bimetal. The form of the breaking member may be any shape capable of breaking the case: it may, for example, be structured such that a bent rod can be deformed to form an acute bending angle at a predetermined temperature so that the case may be staved in by the angular bent part or the tip thereof. In this case, the tip may have a sharpened needle-like shape. Such a breaking member may not be fixed in the case so that the deformation may not be inhibited, or it may be fixed in a manner such that the deformation is possible. Furthermore, the breaking member may be placed in the case or fixed to the outer surface of the case: when fixed to the outer surface of the case, the breaking member is preferably adapted to be deformed at the determined temperature toward the inside of the case so as to break the case. When the broken material and the case are made of a metal, the broken material may be fixed to the case by welding or the like. If the breaking member made of metal is to be fixed to the case which is made of a composite material consisting of metal and resin, the case may, for example, be structured such that the breaking member is fixed by welding to the metal portion of the case, or such that plastics are laminated at the portion to be so fixed so that the laminated plastics can be fusion-bonded together.
The case may include at least one broken material or a plurality of broken materials.

The temperature at which the breaking member is to be deformed is, for example, the temperature of vacuum processing. Specifically, in the case where the exhausting process and the gas adsorption onto the getter are both performed during baking, the temperature for causing the deformation may be equivalent to the heating temperature for baking. In an early stage of baking, large amounts of gases are present between the inner and outer pipes. If the case is immediately broken under such conditions, the getter in the case will immediately be saturated, and accordingly the gases may not be sufficiently removed. In such a case, preferably, the exhausting process may solely be performed in the early stage of baking, and thereafter when the predetermined vacuum rate is attained, the breakage of the case may be done at the temperature increased to permit the breakage of the case. In the present invention, by performing both exhausting operation and gas adsorption onto the getter during baking, it is possible to accomplish evacuation to the predetermined vacuum rate within a shorter time as compared with the conventional method including the exhausting process alone. The gases present in baking mainly include water vapor, oxygen, nitrogen, and the like. Therefore, for adsorbing such gases during baking, synthetic zeolite, which has the excellent ability to adsorb gases other than hydrogen, is preferably used as the getter.

The temperature for causing the deformation of the breaking member may be equivalent to the temperature at which the vacuum thermally insulated pipe of the present invention is used. As described above, by baking before use, the gases present between the inner and outer pipes can be discharged to achieve a predetermined vacuum rate. However, gases may penetrate into the pipes from the outside during a long period of use, and accordingly the penetrating gases are also preferably removed for maintaining the predetermined vacuum rate. Therefore, by deforming the breaking member so as to break the case at the temperature at which the vacuum thermally insulated pipe is used, the penetrating gases can effectively be removed. In the use of the vacuum thermally insulated pipe of the present invention, which is filled with a coolant at less than room temperature, if the temperature for causing the deformation of the breaking member is room temperature or higher, for example, the breaking member will be deformed during baking or before introduction of the coolant, and consequently the hydrogen gas penetrating with the passage of time may not be sufficiently adsorbed. Therefore, in this case, the temperature for causing the deformation of the breaking member is preferably a temperature less than the room temperature, and may be the coolant temperature or near the coolant temperature. In the use of the vacuum thermally insulated pipe, when the coolant is introduced in the inner pipe, the temperature of the inner pipe is gradually decreased to nearly the same as the coolant temperature. Thus, the temperature for causing the deformation may be a specified temperature prevailing in the cooling process. Namely, the temperature for the deformation may be the coolant temperature or higher and less than the room temperature. For example, when liquid nitrogen is used as the coolant, the temperature for causing the deformation of the breaking member is, for example, a temperature between 77K and 250K. In addition, when the vacuum thermal insulated pipe of the present invention is used for transporting a high-temperature fluid at a temperature exceeding the baking temperature, the temperature at deformation of the broken material is, for example, a temperature above the baking temperature and lower than the fluid temperature. As descried above, the temperature at deformation of the broken material may be appropriately changed according to desired purposes. An example of the gases penetrating in long-term use is hydrogen. Therefore, for adsorbing gases during the use of the thermally insulated pipe, a getter having an excellent hydrogen adsorbing ability, such as a hydrogen storage alloy or the like is preferably used.

Although the number of the gas adsorbent may be one, a plurality of gas adsorbents may be provided for effectively adsorbing gases. In particular, in a longer vacuum thermally insulated pipe, a plurality of gas adsorbers are preferably disposed in a longitudinally distributed arrangement. When the getter housed in the gas adsorber is a powder, the getter may possibly be discharged together with gases during evacuation of the thermally insulated pipe. A countermeasure against the discharge of the getter is, for example, to provide a mesh in the case or to dispose the gas adsorber at a position apart from a gas exhaust port. For example, when the exhaust port is at one end of the vacuum thermally insulated pipe, a fewer number of gas adsorbers are disposed near the exhaust port, the number of gas adsorbers being increased toward the other end. When exhaust ports are positioned at both ends of the vacuum thermal insulated pipe, a fewer number of gas adsorbers are disposed near either end, the number of the disposed gas adsorbers increasing toward the center from either end.

The vacuum thermal insulated pipe of the present invention can be suitably used as a thermal insulated pipe for housing a cable core of a superconducting cable. A representative structure of a superconducting cable includes a cable core having a superconducting conductor, and a thermal insulated pipe in which the core is housed and which is filled with a coolant such as liquid nitrogen for cooling the core. More specifically, the cable core includes a former, a superconducting conductor, an electric insulating layer, a superconducting shielding layer, and a protection layer which are disposed in that order from the center.

When the vacuum thermally insulated pipe of the present invention is used as the thermally insulated pipe of a superconducting cable, it is preferable to dispose two types of gas adsorbers: i.e., a gas adsorber adapted for the baking, specifically the gas adsorber being provided with the case containing the getter having the excellent property of adsorbing gases other than hydrogen and the breaking member which can be deformed at the baking temperature; and the gas adsorber adapted for being used during the use of the thermally insulated pipe, specifically, the gas adsorber being provided with the case containing the gas adsorbent having the excellent property of adsorbing hydrogen and the breaking member which can be deformed at the temperature of a coolant for cooling the cable core. In such a vacuum thermally insulated pipe, it is possible to achieve an increase in the efficiency of vacuum processing and also to keep a high vacuum rate over a long period of time.

### Advantage of the Invention

The vacuum thermally insulated pipe of the present invention having the above-descried structure exhibits superior performance of shortening the vacuum processing time, as compared with the cases of performing only exhaust processing. The vacuum thermally insulated pipe of the present invention can sufficiently remove the gases penetrating in the pipe with the passage of time and thus exhibits the excellent performance of maintaining the predetermined vacuum rate over a long period of time. In a superconducting cable of the present invention including such a vacuum thermal insulated pipe, the vacuum processing time can be shortened, and a high vacuum rate can be maintained over a long period of time.

### Brief Description of the Drawings

[Figurer 1] Figurer 1 is a schematic drawing showing the constitution of a vacuum thermal insulated pipe of the present invention.
[Figurer 2] Figurer 2 is a schematic drawing showing the constitution of a gas adsorbent provided in a vacuum thermal insulated pipe of the present invention.
Figurer 3 is a sectional view schematically showing the constitution of a superconducting cable including a vacuum thermal insulated pipe of the present invention.

### Reference Numerals

1 vacuum thermal insulated pipe, 2 double structure pipe, 21 inner pipe, 22 outer pipe, 3 gas adsorbent, 4 thermal insulation layer, 5 spacer, 10 superconducting cable, 11 cable core, 12 former, 13 superconducting conductor, 14 electric insulating layer, 15 superconducting shielding layer, 16 protection layer, 17 coolant, 18 corrosion protection layer, 30 getter material, 31 case, 32 broken material

### Best Mode for Carrying Out the Invention

An embodiment of the present invention will be described as follows. In the drawings, the same reference numerals denote the same members, and the dimensional ratios do not necessarily coincide with those described below.

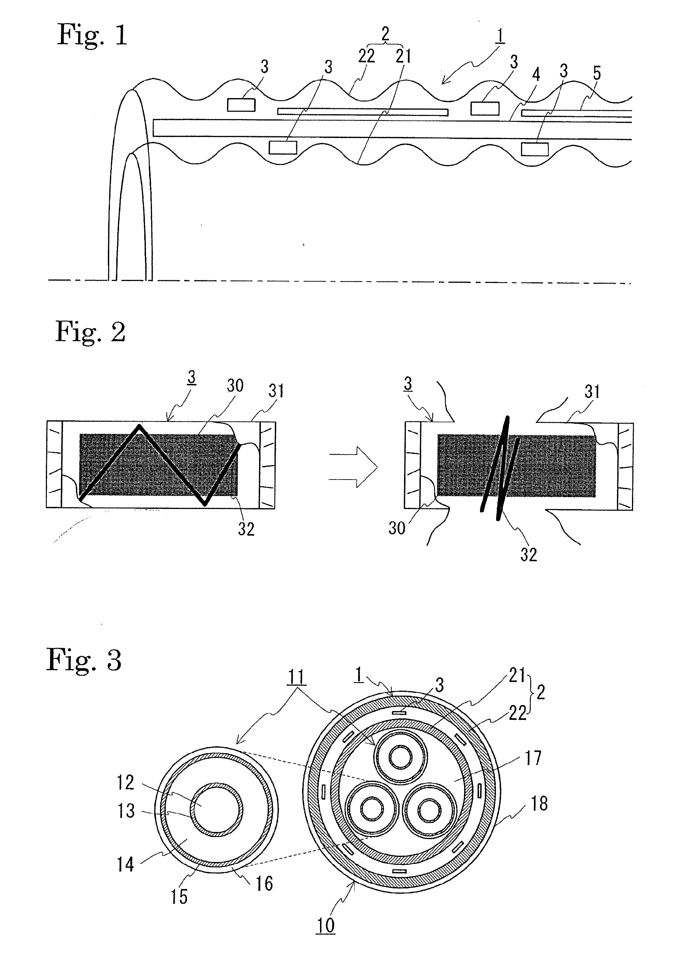

Figure 1 is a schematic drawing showing the constitution of a vacuum thermal insulated pipe of the present invention, and Figure 2 is a schematic drawing showing the constitution of a gas adsorber housed in a vacuum thermally insulated pipe of the present invention. The vacuum thermal insulated pipe 1 shown in the drawing is a double structure pipe 2 including an inner pipe 21 and an outer pipe 22, the space between the inner and outer pipe 21 and 22 being evacuated. In addition, gas adsorbers 3, each including a vacuum-sealed getter capable of adsorbing gases and each having a structure such that the sealed state can be broken at a predetermined temperature, are disposed between the inner pipe 21 and outer pipe 22.

In the double structure pipe 2 of this embodiment, a stainless corrugated pipe is used as each of the inner and outer pipes 21 and 22. In addition, a thermal insulation layer 4 is formed by winding a thermal insulation on the outer periphery of the inner pipe 21. The thermal insulation layer 4 may be appropriately provided according to the desired thermal insulation performance and need not be necessarily provided. In this embodiment, a multi-layer thermal insulation (the trade name: Super insulation) is used as the thermal insulation so as to reflect radiant heat. Furthermore, the space between the inner and outer pipes 21 and 22 is evacuated. Although Fig. 1 shows the double structure pipe 2 with the left end open, the pipe 2 is actually closed after evacuation.

The gas adsorbents 3 are disposed between the inner and outer pipes 21 and 22. As shown in Fig. 2, each of the gas adsorbers 3 includes a getter 30 capable of adsorbing gases, a case 31 capable of housing the getter 30 in a vacuum sealed state, and a breaking member 32 for breaking the vacuum sealing of the case 31 by deformation caused at a predetermined temperature. The getter 30 is a material capable of adsorbing gases such as moisture (water vapor) contained in the space between the inner pipe 21 and the outer pipe 22 (refer to Fig. 1) as well as in the thermal insulation, gases, such as oxygen, nitrogen, and carbon dioxide, released from the pipes 21 and 22 and the thermal insulation; and gases such as hydrogen penetrating through the pipe 22 over a long period of time. Thus, the getter may be appropriately selected according to the gas to be adsorbed. In this embodiment, synthetic zeolite (the trade name: "molecular sieve") is used as the getter for mainly adsorbing gases other than hydrogen, and a titanium alloy is used as the getter for mainly adsorbing hydrogen gas. The respective getters are contained in different cases. Namely, in this embodiment, a plurality of two types of gas adsorbers, that is, the gas adsorber 3 for adsorbing gases other than hydrogen, and the gas adsorber 3 for adsorbing hydrogen gas, are disposed in a distributed arrangement between the inner pipe 21 and outer pipe 22. In addition to the gas adsorbers 3, spacers 5 are disposed between the inner pipe 21 and outer pipe 22 in order to secure the space for evacuation.

The case 31 for housing the getter 30 has a bag-like shape as shown in Fig. 2. In this embodiment, the bag is made of an aluminum foil. The case is structured such that the getter is filled from an opening, and the opening is sealed after completion of the subsequent evacuation so that the sealed state can be maintained until the case is broken by the breaking member which will be described later below. The getter material is previously activated and then contained in the case. In this structure, the getter material is kept in an active state over a long period of time after sealing and thus can exhibit the sufficient adsorption ability when the case is broken.

The breaking member 32 is deformed at a predetermined temperature so as to rupture at least a portion of the case 31 and thereby to break the vacuum state. Therefore, the breaking member 32 only needs to be deformed at the predetermined temperature, and in this embodiment, the breaking member 32 is made of a shape memory alloy. As shown in Fig. 2, the broken material 32 is formed in a N-shaped bent form and contained in the case 31 without being fixed to the case 31. The breaking member 32 is structured such that it can be deformed at the predetermined temperature to form an acute angle at the bent portion so that the case 31 can be staved in by the sharp angular portion or the end portion thereof. The broken material 32 is contained in the case 31 at the time when the getter material 30 is charged.

The temperature for causing the deformation of the breaking member is, for example, the baking temperature or the temperature at which the vacuum thermally insulated pipe is used. In this embodiment, the vacuum thermally insulated pipe is used as a pipe for transporting a coolant at a temperature lower than room temperature, and the temperature for causing the deformation of the breaking member 32 (refer to Fig. 2) provided in the gas adsorber 3 for adsorbing gases other than hydrogen is the baking temperature, while the temperature for causing the deformation of the breaking member 32 provided in the gas adsorber 3 for adsorbing hydrogen gas is a temperature between the coolant temperature and the room temperature. Any one of the gas adsorbers 3 can adsorb gases regardless of the position disposed between the inner pipe 21 and the outer pipe 22 (refer to Fig. 1). However, in the case of the gas adsorber 3 provided with the breaking member that can be deformed by cooling due to the coolant, the breaking member can be more securely cooled to the temperature for the deformation and accordingly more securely deformed, if it is disposed near the inner pipe 21 through which the coolant is passed. Therefore, in this embodiment, particularly, the gas adsorber for adsorbing hydrogen gas was disposed near the inner pipe 21.

The vacuum thermal insulated pipe 1 having the above-described structure is preferably formed as follows (refer to Fig. 1). The gas adsorbers 3 previously prepared are disposed around the outer periphery of the inner pipe 21, and the thermal insulation is wound around the outer periphery thereof to form the thermal insulation layer 4. Then, the gas adsorbers 3 and the spacers 5 are disposed around the outer periphery of the thermal insulation layer 4, and the outer periphery thereof is covered with a planar material for an outer pipe. Thereafter, the sides of the planar material are abutted each other and welded together to form the tubular outer pipe 22. Thus, the double structure thermally insulated pipe including the gas adsorbers disposed between the inner pipe 21 and outer pipe 22. Then, one of the ends of the thermally insulated pipe is closed, and subsequently the evacuation thereof is performed. Specifically, the outer pipe 22 is heated from the outside to activate the moisture and gases contained in the constituent materials and, at the same time, the gases are discharged from the other open end. The heating temperature may be appropriately determined, and both ends of the thermal insulated pipe may be used as the exhaust ports.

Then, the thermal insulated pipe is heated to the baking temperature, and the temperature is maintained for a predetermined time. During baking, large amounts of gases such as moisture (water vapor), oxygen, nitrogen, carbon dioxide, and the like are released from the constituent materials of the thermal insulated pipe. At that time, the breaking members disposed in the gas adsorbers 3 for adsorbing gases other than hydrogen are deformed to break the cases, and consequently the gases are effectively adsorbed. In this structure, the vacuum processing time can be shortened as compared with the case of exhaust-only processing. The sealed state of the gas adsorbents 3 for adsorbing gases other than hydrogen is broken after the baking temperature has been attained, and therefore the previously activated getters can sufficiently adsorb the gases during baking.

After the thermal insulated pipe reaches a predetermined vacuum rate, the other open end of the thermal insulated pipe is sealed to obtain the vacuum thermal insulated pipe 1 of the present invention. The vacuum thermally insulated pipe 1 of this embodiment is equipped with the gas adsorbers 3 for adsorbing hydrogen gas in order to adsorb gases such as hydrogen penetrating with the passage of time during use of the thermally insulated pipe (in this embodiment, in the state where the coolant is passed through the inner pipe). Therefore, the breaking members provided in the gas adsorbers 3 for adsorbing hydrogen gas are deformed to break the cases as a result of cooling made by the coolant, and thereby the gases penetrating from the outside of the pipe can be effectively adsorbed. As a result, the vacuum thermal insulated pipe 1 can maintain the initial vacuum state over a long time. Furthermore, in this embodiment, the gas adsorbents 3 for adsorbing hydrogen gas are disposed near the inner pipe in which the coolant is passed, the broken materials can be more securely cooled and sufficiently deformed.

The above-described vacuum thermally insulated pipe is suitable for use as a thermally insulated pipe for a superconducting cable. Figure 3 is a sectional view schematically showing the constitution of a three-core bundle-type superconducting cable including the vacuum thermally insulated pipe of the present invention. A cable 10 includes three cable cores 11 housed in the vacuum thermal insulated pipe 1. Each of the cores 11 has a former 12, a superconducting conductor 13, an electric insulation layer 14, a super conducting shielding layer 15, and a protection layer 16, which are provided in that order from the center (described in detail below). The three cores 11 are stranded and housed in the vacuum thermal insulated pipe 1, and a coolant 17 such as liquid nitrogen is passed through the inner pipe 21 in order to cool the cores 11. Furthermore, a corrosion protection layer 18 composed of polyvinyl chloride or the like is provided on the outside of the outer pipe 22. In Fig. 3, a thermal insulation layer and spacers are omitted. Although the gas adsorbents 3 are disposed at the center between the inner and outer pipes 21 and 22, the gas adsorbents 3 may be disposed near the outer pipe or the inner pipe or disposed on both the outside and inner side, as shown in Fig. 1.

When the vacuum thermal insulated pipe 1 shown in Fig. 1 is used as a thermal insulated pipe of a superconducting cable, vacuum processing is performed under a condition in which the cable cores are housed. Therefore, the baking temperature is preferably a temperature at which the cores are not thermally damaged, specifically about 100°C or less. The higher the temperature in such temperature range, the more easily the gases can be released, which results in a reduction in the vacuum processing time. It is, therefore, preferable to adopt the baking temperature as the temperature for causing the deformation of the breaking member provided in the gas adsorbers 3 for adsorbing gases which are easily released during baking.

In the use of the superconducting cable, a coolant such as liquid nitrogen is passed through the thermal insulated pipe of the superconducting cable. Therefore, the temperature for causing the deformation of the breaking member provided in the gas adsorbers 3 for adsorbing hydrogen gas penetrating with the passage of time during use is preferably a temperature between 77K to 250K.

Next, the components of a cable core provided in the superconducting cable will be described below in the structural order (refer to Fig. 3).

### (Former)

The former 12 may be a solid former prepared by stranding metal wires or a hollow former prepared using a metal pipe. The solid former is, for example, prepared by stranding a plurality of copper wires. In the case of the hollow former, the inside thereof can be used as a channel for the coolant.

### (Superconducting conductor)

The superconducting conductor 13 is preferably a tape wire which is prepared by covering a plurality of oxide high-temperature superconducting filaments with a silver sheath. In this embodiment, a Bi-2223 tape wire is used. The tape wire is wound in a multilayer on the former 12 to form the superconducting conductor 13.

### (Electric insulating layer)

The electric insulating layer 14 is formed on the superconducting conductor 13. The electric insulating layer 14 is prepared by, for example, winding a laminate of kraft paper and a resin film of polypropylene or the like (the trade name: "PPLP", manufactured by Sumitomo Electric Industries, Ltd.) on the outer periphery of the superconducting conductor 13. In addition, an inner semiconductive layer may be provided on the inner surface side of the electric insulating layer 14, i.e., immediately on the superconducting conductor 13, and an outer semiconductive layer may be provided on the outer surface side, i.e., immediately under the superconducting shielding layer 15, which will be described below.

### (Superconducting shielding layer)

The superconducting shielding layer 15 is provided on the outside of the electric insulating layer 15 coaxially relative to the superconducting conductor 13. The superconducting shielding layer 15 is formed by winding the same superconducting wire as that used for the superconducting conductor 13.

### (Protection layer)

Furthermore, the protection layer 16 is formed on the superconducting shielding layer 15. The protection layer 16, which functions as a mechanical protection for the structures existing in the inner side thereof is formed by winding a kraft paper or a cloth tape on the superconducting shielding layer 15.

### Industrial Applicability

The vacuum thermally insulated pipe of the present invention can be suitably used as a structural member for a transport path used for transporting a cryogenic fluid and a high-temperature fluid. Specifically, the vacuum thermal insulated pipe is suitably used as a thermal insulated pipe for a superconducting cable, various pipe arrangements, such as a cool water pipe arrangement, a feed pipe arrangement, a LNG pipe arrangement, a coolant pipe arrangement, a hot water pipe arrangement, a hot-water supply pipe arrangement, and a heat exchange medium pipe arrangement; pipe arrangement joints; and pipe arrangement devices. A superconducting cable including the vacuum thermally insulated pipe of the present invention can be suitably used as a structural member for power supply lines. The superconducting cable including the vacuum thermal insulated pipe of the present invention can be used for both an alternating current and direct current.

## Claims

1. A vacuum thermally insulated pipe comprising:
a vacuum thermal insulation pipe including of an inner pipe and an outer pipe; and
a gas adsorber disposed between the inner pipe and the outer pipe;
wherein the gas adsorber includes a getter for adsorbing gases, a case for housing the getter in a vacuum sealed state, and a breaking member for breaking the vacuum state of the case by being deformed at a predetermined temperature.

2. The vacuum thermal insulated pipe according to claim 1, wherein the broken material is housed in the case.

3. The vacuum thermally insulated pipe according to claim 1 or 2, wherein the breaking member is deformable at the temperature of vacuum processing of the vacuum thermally insulated pipe.

4. The vacuum thermally insulated pipe according to claim 1 or 2, wherein the inner pipe is filled with a coolant having a temperature less than the room temperature, and the breaking member is to be deformed at a temperature in the range between the temperature of the coolant thus filled in the inner pipe and the room temperature.

5. A superconducting cable comprising the vacuum thermal insulated pipe according to any one of claims 1 to 4.
